# EUROPÄISCHE PATENTSCHRIFT

(11) **EP 1 940 579 B1**
(45) Veröffentlichungstag und Bekanntmachung des Hinweises auf die Patenterteilung: **23.06.2010**
(21) Anmeldenummer: 06721961.8
(22) Anmeldetag: 16.05.2006
(51) Int. Cl.: B23K 26/14

(54) **VERFAHREN ZUR MATERIALBEARBEITUNG MITTELS EINES IN EINEM WASSERSTRAHL GEFÜHRTEN LASERS SOWIE VORRICHTUNG ZUR DURCHFÜHRUNG DES VERFAHRENS**
METHOD FOR MATERIAL WORKING BY MEANS OF A LASER GUIDED IN A WATER JET AND DEVICE FOR CARRYING OUT SAID METHOD
PROCEDE D'USINAGE DE MATERIAU AU MOYEN D'UN LASER GUIDE PAR JET D'EAU ET DISPOSITIF POUR METTRE LEDIT PROCEDE EN OEUVRE

(30) Priorität: 17.05.2005 CH 857052005
(43) Veröffentlichungstag der Anmeldung: 09.07.2008
(73) Patentinhaber: TECHNIKUS AG, 9490 Vaduz (LI)
(72) Erfinder: HATEBUR, Franz, CH-3626 Huenibach (CH)
(74) Vertreter: Felber, Josef
(86) Internationale Anmeldenummer: PCT/CH2006/000259
(87) Internationale Veröffentlichungsnummer: WO 2006/122441

(56) Entgegenhaltungen:
- EP-A- 0 515 983
- EP-A- 1 293 316
- WO-A-95/32834
- WO-A-99/56907

## Beschreibung

Diese Erfindung betrifft ein Verfahren zur Materialbearbeitung gemäß dem Oberbegriff des Patentanspruchs 1 sowie eine Vorrichtung zur Durchführung des Verfahrens gemäss dem Oberbegriff des Patentanspruchs 6.

Die Laserstrahlung wird in vielfältiger Weise zur Materialbearbeitung in der Industrie eingesetzt, zum Beispiel zum Schneiden, Bohren, Schweißen, Markieren und zur Materialabtragung. Es sind nahezu alle Materialien wie z.B. Stahl, Stahllegierungen, NE Metalle, Kunststoffe und Keramiken bearbeitbar. Bei fast allen diesen Verfahren wird der Laserstrahl mittels eines optischen Elements, wie z.B. einer Linse, auf das zu bearbeitende Material fokussiert, um die für den Bearbeitungsvorgang notwendige Intensität zu erzeugen. Aufgrund dieser zwingenden Strahlungsfokussierung war ein Arbeiten lediglich am Ort des Fokuspunktes oder in dessen unmittelbarer Umgebung möglich.

Um eine hohe Intensität am Bearbeitungsort zu erhalten, ist ein möglichst kleiner Strahldurchmesser notwendig. Je kleiner der Strahldurchmesser, mit desto geringeren Ausgangsleistungen der Laserstrahlungsquelle kann gearbeitet werden. Je kleiner die Ausgangsleistung des Lasers, desto geringer ist auch sein Anschaffungspreis.

Aus der EP 0 762 947 B1 ist ein derartiges Verfahren und eine Vorrichtung bekanntgeworden. Bei dem dort vorgestellten Verfahren wird ein Laser ab dem Resonator in einer Glasfaser zugeführt und schliesslich in einen Wasserstrahl eingekoppelt. Hierzu dient ein scheibenförmiger Wasserzuführraum in Form einer liegend angeordneten Scheibe, das heisst eines scheibenförmigen Zylinderabschnittes, dessen obere Seite ein Fenster bildet, durch welches der vertikal von oben auftreffende Laser in den Wasserzuführraum geführt wird. Im Zentrum der unteren Seite des Zylinderabschnittes und somit konzentrisch zu diesem ist eine Düse geformt. Diese bildet eine kreisrunde Öffnung von etwa 60µm Durchmesser. Der Durchmesser des Zuführraumes in Form des scheibenförmigen Zylinderabschnittes beträgt ein Mehrfaches dieses Durchmessers. Die Düsenöffnung ist scharfkantig und weitet sich gegen unten konisch aus. Das Wasser wird auf Drucken von 200 bis 500 bar aus dem Zuführraum durch die Düse gedrückt und bildet somit einen scharfen Wasserstrahl mit hoher Geschwindigkeit und gleichbleibender Dicke. Der Laser wird nun genau auf die Ebene der Düsenöffnung einfokussiert, sodass er dort denselben Durchmesser wie der Wasserstrahl aufweist. Fortan wird er von der äusseren Begrenzungsfläche des Wasserstrahls reflektiert und bleibt im Innern des Wasserstrahls geführt. Wasserstrahl und Laserstrahl sind quasi deckungsgleich. Das Wasser wird benötigt, um die Laserenergie zu übertragen und die vom Laser weggebrannten Materialien von der Bearbeitungsstelle wegzufördern.

Bei dieser Konstruktion erweist es sich als nachteilig, dass der Laser mit einem Durchmesser von 60µm relativ stumpf ist. Wohl lassen sich damit viele Materialien bearbeiten. Ein feinerer Laserstrahl wäre aber wünschbar, denn dann könnte man feinere Schnitte erzielen, müsste also entsprechend weniger Material entfernen und würde entsprechend weniger Leistung benötigen, könnte also mit einem kostengünstigeren Laser arbeiten. Ein weiterer Nachteil dieser Konstruktion liegt in der Tatsache, dass der Laser ab dem Resonator in einer Glasfaser geführt wird, zum Teil über relativ grosse Distanzen, jedenfalls über mindestens 2 Meter oder mehr, und dabei sowohl einen Leistungsverlust wie auch einen Verlust von optischer Qualität eingehandelt wird.

Die Aufgabe der vorliegenden Erfindung ist es, ein Verfahren zur Materialbearbeitung mittels eines in einem Wasserstrahl geführten Lasers anzugeben, das mit einem Laser kleineren Durchmessers arbeitet, das mit einer kleineren Laserleistung mindestens die gleiche Schnittleistung bietet und dabei erst noch eine bessere Qualität der Schnittkanten liefert. Eine weitere Aufgabe besteht in der Angabe einer Vorrichtung zur Durchführung des Verfahrens. Ausserdem muss der Laserstrahl so in den Wasserstrahl eingekoppelt werden, dass die Düse nicht beschädigt wird.

Diese Aufgabe wird gelöst von einem Verfahren zur Materialbearbeitung mittels eines konzentrisch im Innern eines Wasserstrahls (W) geführten Lasers (L), bei dem der Laser (L) über eine Linse von hinten in einen aus einem Zuführungsraum durch eine Düse (D) gepressten Wasserstrahl (W) eingekoppelt wird, das sich dadurch auszeichnet, dass der Laser (L) mittels einer Linse auf einen solchen Durchmesser fokussiert wird, der höchstens halb so gross ist wie jener des Wasserstrahls, und die Fokussierebene (F) dabei mindestens um den doppelten Strahldurchmesser von der Düsenöffnungsebene (E) entfernt im erzeugten Wasserstrahl (W) angeordnet ist.

Diese Aufgabe wird andrerseits gelöst von einer Vorrichtung zur Materialbearbeitung mittels eines konzentrisch im Innern eines Wasserstrahls (W) geführten Lasers (L), bei dem der Laser (L) über eine Linse von hinten in einen aus einem Zuführungsraum durch eine Düse (D) gepressten Wasserstrahl (W) eingekoppelt wird, die sich dadurch auszeichnet, dass eine Linse vorhanden ist, mittels derer der Laser (L) mindestens auf einen solchen Durchmesser fokussierbar ist, der höchstens halb so gross ist wie jener des Wasserstrahls, und die Fokussierebene (F) dabei mindestens um den doppelten Strahldurchmesser von der Düsenöffnungsebene (E) entfernt in den erzeugten Wasserstrahl (W) einkoppelbar ist.

Anhand der Figuren wird das Verfahren und die Vorrichtung erläutert und erklärt.
Es zeigt:
- Figur 1:: Einen Schnitt durch einen Schneidkopf mit dem Wasserzuführraum und der Austrittsdüse für die Erzeugung des Wasserstrahls;
- Figur 2:: Eine schematische Darstellung des Einfokussierens des Lasers in den erzeugten Wasserstrahl.

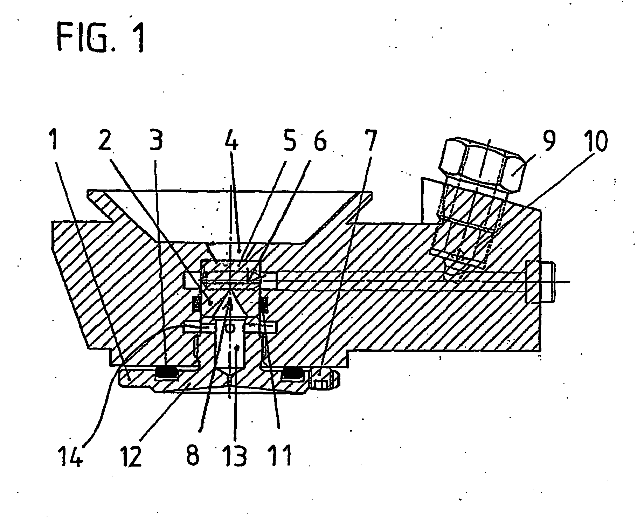

Wie die Figur 1 zeigt, ist der Schneidkopf ein aus dem Vollen gefrästes Stahlteil. Von unten wurde eine Sackbohrung eingebracht, deren oberer Endbereich den Wasserzuführraum 6 bildet. Von oben ist eine trichterförmige Ausfräsung 4 eingebracht, welche mit der Sackbohrung kommuniziert. Von unten ist dann ein Fenster 5 aus einem Quarzglas eingesetzt, welches die Sackbohrung an ihrem oberen Ende verschliesst. Hernach ist von unten der Düsenkörper in form eines sogenannten Düsensteins 2 eingesetzt, welcher seitlich über einen O-Ring 11 mit der Wand der Sackbohrung abgedichtet ist. An seinem oberen Ende bildet der Düsenstein 2 eine feine Bohrung 8, ab welcher diese sich trichterförmig nach unten ausweitet. Der Düsenstein 2 wird von unten mittels eines Spannelementes 12 nach oben gepresst. Dieses Spannelement 12 ist über ein Innengewinde in der Sackbohrung mit derselben verschraubt. Die Abdichtung erfolgt mittels eines O-Ringes 3. An der Peripherie weist dieses Spannelement 12 Distanzschrauben 11 auf. Mit dem Spannelement 12 wird unterhalb der Düse 8 ein Strahlraum 13 gebildet, in dessen Mitte der Wasserstrahl längs der strichpunktierten Linie verläuft. Im Innern dieses Strahlraumes 13 wird über die Zufuhrbohrung 14 ein Überdruck erzeugt, indem mittels einer Pumpe Luft in diesen Strahlraum 13 hineingepumpt wird. Damit wird der Wasserstrahl seitlich mit Gasdruck beaufschlagt, was seine Mantelfläche glatter hält und Verwirbelung der an den Wasserstrahl angrenzenden Gasschicht reduziert. Die Flüssigkeit wird dem Wasserzuführraum über eine horizontale Bohrung auf einem Druck von 200 bis 500 bar zugeführt. Mit der Schraube 10, die in die Bohrung hineinragt, kann die pro Zeit zugeführte Wassermenge reguliert werden, indem sie am Schraubenkopf 9 verdreht wird.

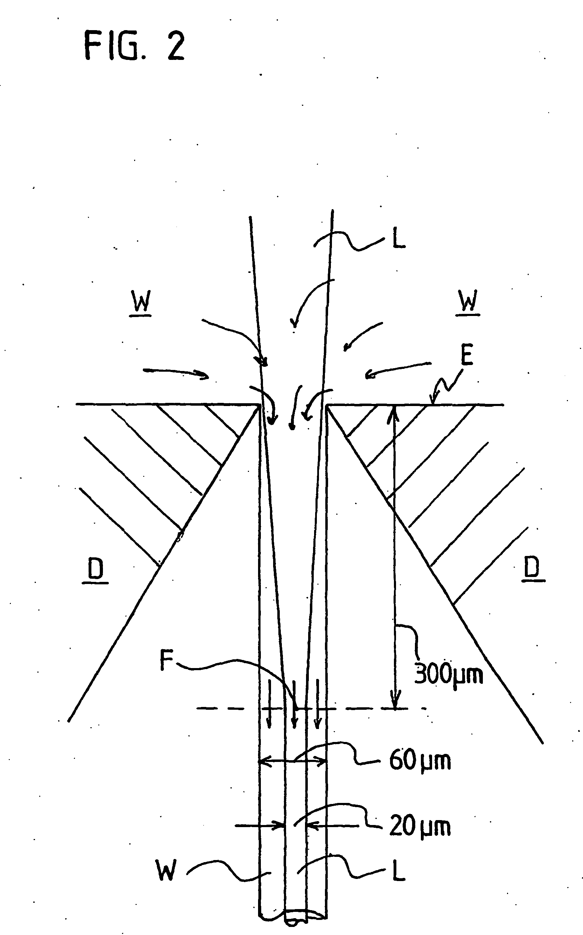

Der Laser wird von oben an das Fenster 5 herangeführt, sodass er genau senkrecht zur Fensterebene auf dasselbe auftrifft, wie mit der strichpunktierten Linie eingezeichnet. Der Laserstrahldurchmesser beim Resonator von anfänglich 28mm wird mit einer ersten Kollimationslinse zunächst auf 36mm aufgeweitet, dann an einem Spiegel umgelenkt und mit weiteren Kollimationslinsen zum Einschränken auf 18mm fokussiert, und dann mit einer F50-Linse auf 1/50 fokussiert, das heisst auf 1/50 von 18mm, das sind 36 Mikrometer. Allerdings ist es möglich, den Laser noch weiter zu fokussieren, bis hinunter auf 20 bis 22 Mikrometer. Der Laser braucht vom Resonator bis zum Fokuspunkt bloss noch einen Weg von ca. 50cm zurückzulegen. Indem der Laser in dieser Weise frei geführt wird, können Leistungsverluste und Verluste an optischer Qualität vermieden werden, die mit einer Führung des Lasers in einer Glasfaser unweigerlich auftreten. Oberhalb des Fensters ist eine hier nicht eingezeichnete Kollimationslinse angeordnet, mit welcher der Laser fokussiert wird, sodass seine Fokussierungsebene an der gewünschten Stelle im Wasserstrahl unterhalb der Düse zu liegen kommt. Als Laser wird zum Beispiel ein Nd/YAG-Laser mit einer wellenlänge von 1064 Nanometern und einer Leistung von 100 Watt eingesetzt. Dieser Laser wird rein durch die Atmosphäre durch Spiegel zum Umlenken und über Kollimationslinsen in den erzeugten Wasserstrahl eingekoppelt. Diese Einkoppelung wird anhand der Figur 2 beschrieben.

Im gezeigten Beispiel sind die geometrischen Verhältnisse so gewählt, dass der Fokussierungspunkt 300 Mikrometer, das heisst um 282 Wellenlängen des Laser unterhalb der Düseneintrittskante liegt, wobei die Düse eine lichte Weite von 60 Mikrometern aufweist. Bei dieser Düsenweite von 60 Mikrometern gelingt es durch diese Art der Fokussierung, einen Laserstrahl von bloss noch 20 Mikrometern Dicke innerhalb des Wasserstrahls W gebündelt zu halten, so wie eine Bleistiftmiene im Innern eines Bleistiftes verläuft! Dieser Laserstrahl ist stark gebündelt und weitet sich über 30mm Distanz nur sehr geringfügig aus! Um das zu erreichen ist es höchst wichtig, den Laser an einer Stelle in den von der Düse D erzeugten Wasserstrahl W einzukoppeln, wo dieser Wasserstrahl eine laminare Strömung aufweist. Das ist aber in der Ebene der Eingangsöffnung der Düsenkante nicht möglich, weil dort die Strömung nicht .ideal laminar sein kann. Gemäss der Lehre von EP 0 762 947 B1 wird der Laserstrahl stets auf den Durchmesser der Düse und des damit erzeugten Wasserstrahls fokussiert, und zudem wird die Fokussierebene genau in die Ebene der Düsenkante gelegt. Bei einer Fokussierung auf den Durchmesser der Düse ist es aber nicht möglich, die Fokussierungsebene in den eigentlichen Wasserstrahl hinein zu legen, an eine Stelle, wo dieser laminar strömt. An der unmittelbaren Düseneintrittskante ist die Strömung nicht optimal. Würde man nun mit einem Fokussierungskegel, der den Laser auf den Durchmesser der Düsenöffnung fokussiert, weiter hinunter und somit in den Wasserstrahl hinein fokussieren, so würde der Laserstrahl im Fokussierkegel die Düsenkanten schneiden und der Düsenstein würde sogleich verbrennen. Es ist daher von sehr wesentlicher Bedeutung, dass der Laser auf einen wesentlich kleineren Durchmesser fokussiert wird als jenen des erzeugten Wasserstrahls. Es hat sich nämlich gezeigt, dass ein konzentrisch in das Innere eines Wasserstrahls einfokussierter Laserstrahl, der nur einen Teil dessen Querschnitts einnimmt, in diesem Teil fokussiert bleibt, und sodann im Innern eines Wasserstrahls so verläuft wie eine Bleistiftmiene in einem Bleistift. Der Laserstrahl wird also allseits von einem nicht Laserlicht führenden Wasserstrahl ummantelt. Nur im Zentrum des Wasserstrahls verläuft konzentrisch zu diesem der Laserstrahl. Diese Erkenntnis führt dazu, dass bei einer bestimmten Wasserstrahldicke ein wesentlich schärferer, das heisst stärker fokussierter und somit dünnerer Laserstrahl geführt werden kann. Ein dünnerer Laserstrahl aber - wenn er zur Bearbeitung von Material eingesetzt wird, erodiert sehr viel weniger Material weg, das heisst er erzeugt sehr viel feinere Schnitte. Die Querschnittsfläche eines Lasers von 20µm Durchmesser weist eine Querschnittsfläche von 314 µm² auf, ein Laser von 60µm Durchmesser weist eine Querschnittsfläche von 2826 µm^{2.} auf, das heisst eine neunfach(!) grössere Querschnittsfläche. Er brennt somit bei der Bearbeitung neun mal mehr Material weg! Daran erkennt man, wie dramatisch sich die Verkleinerung bzw. Verdünnung des Laserstrahls auswirkt! Mit der hier vorgestellten Einfokussierung und Einkoppelung des Lasers in den Wasserstrahl, wobei der Laser derart fokussierbar ist, dass sein Durchmesser höchstens die Hälfte des Wasserstrahldurchmessers misst und die Fokussierebene mindestens um den doppelten Durchmesser des Wasserstrahls von der Austrittsdüse entfernt im Wasserstrahl angeordnet ist, lassen sich weit dünnere Laserstrahlen anwenden als bisher. Fokussierungen bis auf 10 bis 15 Mikrometer Laserstrahldurchmesser im Innern eines 60 Mikrometer-Wasserstrahls sind mit dieser Einkoppelung möglich, solche mit 20 bis 22 Mikrometern haben sich in der Anwendung bereits bewährt.

Bei fünfmal kleinerer Laserleistung - das heisst beim Einsatz eines 100W-Lasers im Vergleich zu einem 500W-Laser wurden gleiche Schnittgeschwindigkeiten und gleichzeitig bessere Schnittqualitäten erzielt. Ausserdem eröffnet ein fein fokussierter Laser von der Grössenordnung von 20 Mikrometern Durchmesser oder weniger ganz neue Applikationen, namentlich in der Medizinaltechnik, wo es um feinste Dimensionen geht.

## Patentansprüche

1. Verfahren zur Materialbearbeitung mittels eines konzentrisch im Innern eines Wasserstrahls (W) geführten Lasers (L), bei dem der Laser (L) über eine Linse von hinten in einen aus einem Zuführungsraum durch eine Düse (D) gepressten Wasserstrahl (W) eingekoppelt wird, ***dadurch gekennzeichnet,* dass** der Laser (L) mittels einer Linse auf einen solchen Durchmesser fokussiert wird, der höchstens halb so gross ist wie jener des Wasserstrahls, und die Fokussierebene (F) dabei mindestens um den doppelten Strahldurchmesser von der Düsenöffnungsebene (E) entfernt im erzeugten Wasserstrahl (W) angeordnet ist.

2. Verfahren zur Materialbearbeitung nach Anspruch 1, ***dadurch gekennzeichnet,* dass** der Laser ab dem erzeugenden Resonator frei in der Atmosphäre auf das Fenster eines Wasserzuführraumes herangeführt wird, aus welchem die Flüssigkeit über eine Düse zu einem Strahl geformt wird.

3. Verfahren zur Materialbearbeitung nach einem der vorangehenden Ansprüche, ***dadurch gekennzeichnet,* dass** der Laser mittels einer Kollimationslinse auf einen Durchmesser fokussiert wird, der einen Drittel des Durchmessers des Wasserstrahls misst, und die Fokussierebene dabei den fünffachen Wasserstrahl von der Düsenöffnungsebene (E) entfernt im Wasserstrahl angeordnet ist.

4. Verfahren zur Materialbearbeitung nach einem der Ansprüche 1 bis 2, ***dadurch gekennzeichnet,* dass** der Laser in einem Wasserstrahl (W) von 60 Mikrometern Durchmesser auf einen Durchmesser von 10 bis 15 Mikrometern fokussiert wird, und die Fokussierebene (F) dabei mehr als den fünffachen Wasserstrahl (W) von der Düsenöffnungsebene (E) entfernt im Wasserstrahl angeordnet ist.

5. Verfahren zur Materialbearbeitung nach einem der vorangehenden Ansprüche, ***dadurch gekennzeichnet,* dass** es mit einem Laser mit einer Leistung von 50 bis 100 Watt betrieben wird.

6. Vorrichtung zur Materialbearbeitung mittels eines konzentrisch im Innern eines Wasserstrahls (W) geführten Lasers (L), bei dem der Laser (L) über eine Linse von hinten in einen aus einem Zuführungsraum durch eine Düse (D) gepressten Wasserstrahl (W) eingekoppelt wird, ***dadurch gekennzeichnet,* dass** eine Linse vorhanden ist, mittels derer der Laser (L) mindestens auf einen solchen Durchmesser fokussierbar ist, der höchstens halb so gross ist wie jener des Wasserstrahls, und die Fokussierebene (F) dabei mindestens um den doppelten Strahldurchmesser von der Düsenöffnungsebene (E) entfernt in den erzeugten Wasserstrahl (W) einkoppelbar ist.

7. Vorrichtung zur Materialbearbeitung nach Anspruch 6, ***dadurch gekennzeichnet,* dass** Mittel zum freien Führen des Laser vorhanden sind, das heisst zum Erweitern, Fokussieren und Umlenken, sowie dass ein Wasserzuführraum mit einer Austrittsdüse zur Formung eines Wasserstrahls vorhanden ist, sowie dass eine Kollimationslinse vorhanden ist, mittels welcher der Laser (L) auf einen solchen Durchmesser fokussiert wird, der höchstens ein Drittel so gross ist wie jener des Wasserstrahls, und die Fokussierebene (F) dabei mindestens um fünffachen Wasserstrahldurchmesser von der Düsenöffnungsebene (E) entfernt in den erzeugten Wasserstrahl (W) einkoppelbar ist.

8. Vorrichtung zur Materialbearbeitung nach einem der Ansprüche 6 oder 7, **dadurch gekennzeichnet, dass** eine Kollimationslinse vorhanden ist, mittels welcher ein Laser von anfänglich 28mm Durchmesser auf einen Durchmesser fokussiert von 20 Mikrometern fokussierbar ist, und die Fokussierebene (F) dabei bei einem Wasserstrahlsdurchmesser von 60 Mikrometern um 300 Mikrometer von der Düsenöffnungsebene (E) entfernt in den erzeugten Wasserstrahl (W) einkoppelbar ist.

9. Vorrichtung zur Materialbearbeitung nach einem der Ansprüche 6 oder 8, **dadurch gekennzeichnet, dass** im Anschluss an die Düse eine Druckkammer angeordnet ist, welche vom Wasser- und Laserstrahl zu durchqueren bestimmt ist und die auf jener der Düse gegenüberliegenden Seite eine Öffnung aufweist, die grösser als der Durchmesser des Wasserstrahls ist, wobei das Innere der Druckkammer mittels einer Pumpe über eine Bohrung unter Gasdruck setzbar ist.

10. Vorrichtung zur Materialbearbeitung nach einem der Ansprüche 6 bis 9, **dadurch gekennzeichnet, dass** der Laser ein 100-Watt Laser vom Typ Nd/YAG ist.

## Claims

1. Method for processing of material by means of laser (L) which is guided concentrically inside a jet of water (W), whereby the laser (L) is being coupled into a compressed water jet (W) pressed out of a nozzle (D) through a lens into the backside of a transfer room, **characterized in that** the laser (L) is focused to such a diameter by means of a lens that is at most half as large as that of the water jet, and the plane (F) within the produced waterjet (W) where the focussing takes place is at least twice the diameter of the water jet away from plane (E) where the opening of the nozzle (D) is located.

2. Method for processing of material according to claim 1, wherein the laser is guided freely in the atmosphere from the generating resonator to the window of the water inlet room out of which the liquid is formed to a jet by a nozzle.

3. Method for processing of material according to one of the preceding claims, **characterized in that** the laser is being focussed by means of a collimation lens down to a diameter of one third of the diameter of the water jet, and that the plane of the focussing within the water jet is fivefold the diameter of the water jet away from the from plane (E) where the opening of the nozzle (D) is located.

4. Method for processing of material according to one of the claims 1 to 2, **characterized in that** the laser is focused into a jet of water (W) of 60 micrometers down to a diameter of 10 to 15 micrometers, and that the plane of the focussing within the water jet more than fivefold the diameter of the water jet away from the from plane (E) where the opening of the nozzle (D) is located.

5. Method for processing of material according to one of the preceding claims, **characterized in that** the laser is operated with an output power of 50 to 100 watts.

6. Device for material processing by means of a concentrically guided laser (L) inside a water jet (W) in which the laser (L) is being coupled into the compressed water jet (W) jet out of a nozzle (D) through a lens into the backside of a transfer room, **characterized** that there is a lens by means of which the laser (L) is focusable down to such a diameter which is at most half of the size of the one of the water jet, while the laser is coupled into a plane (F) of focussing within the water jet which is at least twice the jet diameter away from the plane (E) of the nozzle opening.

7. Device for material processing according to claim 6, **characterized in that** there are means for freely guiding of the laser, that is to expand, focusing and deflecting, and that there is a water transfer room with an outlet nozzle for forming a water jet as well as a collimating lens by which the laser (L) is focusable to such a diameter that is at most a third of the one of the water jet, and that the plane (F) of focussing of the coupled laser within the water jet (W) is at least fivefold the diamter of the water jet (W) away froim the plane (E) of the opening of the nozzle.

8. Device for material according to claim 6 or 7, **characterized in that** a collimating lens is present, by which a laser is focusable from an initial diamter of 28 mm down to a diameter of 20 micrometers, and that the plane (F) of focussing of the coupled laser within the water jet (W), with a water jet diameter of 60 micrometers is around 300 micrometers away from the plane (E) of the opening of the nozzle.

9. Device for material according to claim 6 or 8, behind the nozzle, a pressure chamber is arranged which is to be crossed by the water jet and the laser jet and which, opposite the side of the nozzle has asn opening which is larger than the diameter of the water jet, whereby the interior of the pressure chamber is to be put under gas pressure by means of a pump via a boring.

10. Device for material according to claims 6 to 9, **characterized in that** the laser is a 100-watt laser of the type Nd / YAG.

## Revendications

1. Méthode pour le traitement des matériaux par un laser (L) d'une façon guidé concentriquement à l'intérieur d'un jet d'eau (W), dans laquelle le laser (L) est couplé dans le jet d'eau par une lentille de l'arrière dans un espace d'alimentation de celui-ci le jet d'eau est compressé à travers une buse (D), **caractérisé en ce que** le laser (L) est centrée au moyen d'une lentille sur un diamètre d'une mesure au plus la moitié que celui du jet d'eau, et le plan (F) de la focalisation est arrangé dans ce jet d'eau (W) au moins deux fois le diamètre du jet d'eau loin du plan de l'ouverture (E) de la buse.

2. Méthode pour le traitement des matériaux selon la revendication 1, **caractérisé en ce** le laser - à partir du resonator qui le produit - est guidé librement dans l'atmosphère à la fenêtre de l'espace d'alimentation de l'eau, de laquelle le liquide se forme par une buse d'injection dans un jet.

3. Méthode pour le traitement des matériaux selon l'une des revendications précedées, **caractérisé en ce que** le laser est focalisé par une lentille de collimation sur un diamètre qui mesure un tiers du diamètre du jet d'eau et que le plan (F) de la focalisation est arrangé dans ce jet d'eau (W) cinq fois le diametre du jet d'eau loin le plan de l'ouverture (E) de la buse.

4. Méthode pour le traitement des matériaux selon l'une des revendications 1 à 2, **caractérisé en ce que** le laser est focalisé dans un jet d'eau (W) de 60 micrometres du diametre sur un diametre de 10 à 15 micrometres, et que le plan (F) de la focalisation est arrangé dans ce jet d'eau (W) plus que cinq fois le diametre du jet d'eau loin le plan de l'ouverture (E) de la buse.

5. Méthode pour le traitement des matériaux selon l'une des revendications précédées, **caractérisé en ce qu'**elle est exploité avec un laser avec une puissance de 50 à 100 watts.

6. Dispositif pour le traitement des matériaux par un laser (L) d'une façon guidé concentriquement à l'intérieur d'un jet d'eau (W), dans laquelle le laser (L) est couplé dans le jet d'eau par une lentille de l'arrière dans un espace d'alimentation de celui-ci le jet d'eau est compressé à travers une buse (D), **caractérisé par le fait qu'**il existe une lentille à travers laquelle le laser (L) et focusable au moins à un tel diamètre qui est tout au plus la moitié que celle du jet d'eau, tandis que et le plan (F) de la focalisation est arrangablé dans le jet d'eau produit au moins deux fois le diamètre du jet d'eau loin du plan (E) de l'ouverture de la buse.

7. Dispositif pour le traitement des matériaux selon la revendication 6, **caractérisé en** le fait wue des moyens pour la guidance libre du laser sont présentes, c'est à dire pour développer, pour focaliser et dévier, ainsi qu'il y a une espace d'alimentation de l'eau avec une buse de sortie pour former un jet d'eau, et que d'une lentille de collimation est présent, pour focaliser le laser (L) dans le jet d'eau à un diamètre tel que le plus d'un tiers que celui du jet d'eau, et le plan (F) de la focalisation est au moins cinq fois le diamètre du jet d'eau loin du plan d'ouverture de la buse.

8. Dispositif pour le traitement des matériaux selon l'une des revendication 6 ou 7, **caractérisé en ce qu'**une lentille de collimation est présent, par lequel un laser à partir d'un diamètre initial de 28 mm et focusable à un diamètre de 20 micromètres, et que le laser focalisable dans le jet d'eau (W) sur un plan (F) de la focalisation avec un diamètre de jet d'eau de 60 micrometres, 300 micrometres loin du plan d'ouverture de la buse.

9. Dispositif pour le traitement des matériaux selon l'une des revendication 6 ou 8, **caractérisé en ce** après la buse, une chambre de pression est arrangé, qui est à traverse par le jet d'eau et par le laser et qui a, en face la buse une ouverture qui est plus grand que le diamètre du jet d'eau, est que l'intérieur de la chambre de pression est posable sous pression de gaz par une pompe, à travers un trou.

10. Dispositif pour le traitement des matériaux selon l'une des revendication 6 à 9, **caractérisé en ce que** le laser est un laser de 100 watts de type Nd / YAG.
